# EUROPEAN PATENT SPECIFICATION

(11) **EP 2 130 387 B1**
(45) Date of publication and mention of the grant of the patent: **17.08.2011**
(21) Application number: 08708997.5
(22) Date of filing: 14.02.2008
(51) Int. Cl.: H04W 28/06

(54) **CROSS-LAYER ERROR RECOVERY OPTIMISATION IN WIRELESS SYSTEMS**
SCHICHTÜBERGREIFENDE FEHLERBEHEBUNGSOPTIMIERUNG IN DRAHTLOSEN SYSTEMEN
OPTIMISATION D'EXTRACTION D'ERREURS INTER-COUCHE DANS DES SYSTÈMES SANS FIL

(30) Priority: 19.02.2007 EP 07425087
(43) Date of publication of application: 09.12.2009
(73) Proprietor: Siemens Networks GmbH & Co. KG, 81541 München (DE)
(72) Inventor: GRANELLI, Fabrizio, I-38057 Pergine (TN) (IT); KLIAZOVICH, Dzmitry, I-38050 Povo (TN) (IT); REDANA, Simone, I-25034 Orzinovi (BS) (IT); RIATO, Nicola, I-20040 Caponago (MI) (IT)
(86) International application number: PCT/EP2008/051804
(87) International publication number: WO 2008/101861

(56) References cited:
- WO-A-01/78426
- US-A- 5 627 829
- QIXIANG PANG ET AL: "Performance Improvement of 802.11 Wireless Access Network with TCP ACK Agent and Auto-Zoom Backoff Algorithm" VEHICULAR TECHNOLOGY CONFERENCE, 2005. VTC 2005-SPRING. 2005 IEEE 61ST STOCKHOLM, SWEDEN 30 APRIL - 01 MAY 2005, PISCATAWAY, NJ, USA,IEEE, 30 May 2005 (2005-05-30), pages 2046-2050, XP010855786 ISBN: 0-7803-8887-9
- KLIAZOVICH D ET AL: "A cross-layer scheme for TCP performance improvement in wireless LANs" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, 29 November 2004 (2004-11-29), pages 840-844, XP010757643 ISBN: 0-7803-8794-5 cited in the application

## Description

### Field of the invention

The present invention refers to data packet transmissions in broadband wireless communications networks, and more particularly it concerns a method of optimising error recovery mechanisms in communications using Transmission Control Protocol/Internet Protocol (TCP/IP) suite, so as to reduce overhead of uplink transmissions and delays.

The invention is especially useful for classes of service communications where traffic is substantially asymmetric, with a predominance of the downlink component. Such a situation occurs for instance in systems according to the so called 3rd Generation Long Term Evolution (3G LTE), which is currently under study by 3rd Generation Partnership Group (3GPP), or in systems conforming to IEEE Standards 802.11 and 802.16. The invention is preferably applied in 3G LTE systems and will be disclosed hereinafter in detail in connection with the preferred application.

### Background of the Invention

Broadband wireless market nowadays is the place where major industries are converging in the field of wireless mobile communications, information technology, and multimedia entertainment.

In such framework, the 3G LTE is an attempt to step into wireless broadband taken by cellular providers and equipment vendors. Details on 3G LTE can be found in a number of documents of 3GPP: we mention for instance 3GPP Technical Report (TR) 10.164, "Physical layer aspects for evolved Universal Terrestrial Radio Access (UTRA)", 3GPP TR 10.913 "Requirements for Evolved UTRA", 3GPP TR 23.882 "3GPP System Architecture Evolution: Report on Technical Options and Conclusions" and 3GPP Technical Specification (TS) 36.300, "E-UTRA and E-UTRAN: Overall description".

The requirements for LTE can be summarized as follows:
- Peak data rates of 100 Mb/s in the downlink and 50 Mb/s in the uplink.
- Reduced user- and control-plane latency to less than 10 ms and less than 100 ms respectively.
- Mobility support up to 350 km/h, with high performance up to 120 km/h while optimal performance is targeted for speeds below 14 km/h.
- Spectrum flexibility and reduced network costs.

To achieve the above-mentioned targets new updates to the radio interface as well as modifications to the network architecture are considered.

In particular, 3G LTE introduces evolved radio interface with major enhancement coming from the use of Orthogonal Frequency Division Multiplexing (OFDM) and multiple antenna techniques. These technologies are already available on the market and are used e.g. in systems conforming to IEEE 802.16 standard, such as those proposed by the Worldwide Interoperability for Microwave Access (WiMAX) forum.

Along with the evolved radio interface, 3G LTE specifies evolution of network architecture (System Architecture Evolution, SAE), which is designed to contain fewer network nodes and is focused on packet data communications using the TCP/IP protocol suite, rather than on the traditional circuit-switched approach.

As far as the use of TCP/IP protocol suite is concerned, 3G LTE, similar to other types of wireless networks, suffers from high error rates present at radio channel. Indeed, the TCP/IP protocol suite was originally designed for fixed wired networks where Bit Error Rate (BER) typically varies from 10⁻⁶ to 10⁻⁸, while for wireless channels BER varies from 10⁻¹ to 10⁻³. Such error rates are unacceptable for the TCP and cause significant performance degradation.

In order to compensate wireless errors, 3G LTE employs an error recovery technique at the Link Layer (LL), including Automatic Repeat reQuest (ARQ) at the Radio Link Control (RLC) sublayer and Hybrid ARQ (HARQ) at the Medium Access Control (MAC) sublayer.

In case of ARQ, the receiving system checks the Cyclic Redundancy Code (CRC). If the CRC is correct, an acknowledgment (ACK) is sent back to the sender and the received packet is forwarded to upper layers of the protocol stack for processing. If the CRC check fails, the packet is dropped silently or with negative ACK (NACK) notification sent to the sender. The ARQ considered for implementation in 3G LTE is of Go-Back-N type.

In HARQ, if the CRC is not correct, the packet is not dropped at the receiver side. It is stored for the case when retransmitted packet will be still erroneous and combined recovery can be attempted. This technique is known as "chase combining". Eventually the error is resolved or the maximum number of retransmissions is reached. Each following retransmission can contain additional redundancy information ("incremental redundancy"). The MAC implementation in 3G LTE considers a HARQ of stop-and-wait type, which provides the sender with a binary ACK/NACK feedback for every transmitted packet.

The combined use of ARQ and HARQ at different sublayers in the link layer improves radio channel error rate by several orders: BER is equal to 10⁻² for no retransmission, 10⁻³ after HARQ at the MAC layer, and 10⁻⁶ after ARQ at the RLC layer.

The link layer is not the only layer employing error recovery mechanisms. TCP reliability is obtained through the utilization of a positive acknowledgement scheme that specifies the TCP receiver to acknowledge data successfully received from the sender.

The TCP header reserves special fields for carrying acknowledgement information. As a result, the TCP receiver can produce a TCP acknowledgment (TCP-ACK) as a standalone packet or, in case of bi-directional data exchange, encapsulate it into outgoing TCP segments.

This combination of error recovery techniques at different layers leads however to a non-optimal exploitation of the available network resources.
Indeed, considering by way of example the MAC sublayer besides the TCP layer, in case of successful packet reception the user equipment has to generate the HARQ ACK response at the MAC level and the TCP ACK response at the TCP level. The TCP ACK response is an ordinary payload for the user equipment link layer and requires in turn an acknowledgement by the HARQ entity at the base station ("enhanced Node B", eNB). Summarizing, a single TCP data packet transmission over the radio channel is acknowledged three times, one at the transport level and two times at the link layer, thus making the acknowledgment procedure complex.

Moreover, while HARQ ACKs are just some bits in size, the TCP ACK, as any other payload packet, requires a protocol overhead added at the lower protocol layers (IP, link and physical layers) and therefore consumes a relatively large amount of uplink bandwidth resources, thereby reducing overall system capacity. Further, the user equipment has to negotiate bandwidth for the uplink transmission, and this is a further uplink overhead and causes a delay increase due to the time elapsing between the bandwidth request and the bandwidth grant reception at the user equipment.

In paper "Performance Improvement of 802.11 Wireless Access Network with TCP ACK Agent and Auto-Zoom Backoff Algorithm" by Q. Pang et al. VTC 2005, 30 May 2005, pages 2046 - 2050; two schemes for improving TCP performance over 802.11 WLAN access protocols are proposed. By using a cross-layer design a TCP ACK agent is installed at a WLAN access point. When a MAC ACK is received by the access point, the access point generates a TCP ACK on behalf of the WLAN stations.

A proposal for optimisation of the error recovery procedures in TCP/IP based data transmission is disclosed in the paper "A Cross-layer Scheme for TCP performance Improvement in Wireless LANs", by D. Kliazovich and F. Granelli, presented at the Global Telecommunications Conference (Globecom) 2004, Dallas, TX, USA, 30 November - 3 December, 2004, pages 840 - 844 of the conference proceedings. The solution disclosed in the paper is based on the provision of software entities ("ARQ Snoop Agent") operating between the TCP and the MAC layers in both the sender and the receiver nodes and designed for the exploitation of the link layer ARQ scheme by TCP so as to avoid transmission of TCP ACK packets by the user equipment (UE) towards the base station in a direction opposite to the data flow. Essentially, after a successful packet delivery by the MAC layer, the relevant acknowledgment is sent to the Snoop Agent of the sender node through the link layer interface, and the sender node's agent generates the TCP ACK packet according to the selected TCP acknowledgment scheme. At the same time, the Snoop Agent of the receiver node drops the TCP ACK packet generated by the TCP layer of the same node.

The prior art solution has been studied for mostly static wireless networks, like those conforming to IEEE 802.11 standards, e.g. for Wireless Fidelity (WiFi) networks, and even if its concepts can be applied to a network supporting mobility like 3G LTE, application in a mobile environment is complex and costly. Actually, the prior art solution entails the need of storing at a base station all TCP flow related information (sender sequence number, acknowledgement number, last acknowledged packet sequence number) for every flow traversing that base station. This entails that the base station is to support the whole of the TCP and IP protocol layers, and, in case UE performs soft (hard) mobility handover, the whole of the flow related information is to be transferred to the new base station, this being a time-consuming operation. A further disadvantage is that the prior art solution is not susceptible of a gradual introduction in networks already deployed: indeed, in case the Snoop Agent is implemented in a UE but not in the eNB, the latter would never be able to send its TCP ACK to the packet source, so that a standing retransmission of packets would take place.

### Summary of the Invention

It is an object of the invention to overcome the drawbacks of the prior art by providing a solution which is suitable for networks supporting mobility and allows a gradual introduction in already deployed networks.

The invention provides, in a first aspect, a method according to claim 1.

The representation of the transport layer acknowledgment can be generated at both the base station and the user equipment. In the alternative, it can be generated at the base station only and transmitted to the user equipment along with a data unit. In such case, at the user equipment the representation is extracted from the received data flow and transmitted back to the base station when the transport layer acknowledgment for that received data unit is generated.

The representation can be obtained by applying a hash function to predetermined header fields of a received data unit or of the transport layer acknowledgment. For instance, the hash function can provide the checksum of said header fields. Where the data units already include a checksum field in their headers, the content of such field can be used as the representation, dispensing with an explicit generation thereof. The contents of other header fields, univocally identifying a transport layer acknowledgment, could even be used.

The invention provides, in a second aspect, a base station for a wireless communication system according to claim 7.

The invention provides, in a third aspect, a user equipment for use in a wireless communication system according to claim 11.

In an alternative, for use in systems in which the representation of the transport layer acknowledgment is generated at the base station only and is transmitted to the user equipment along with the corresponding data unit, the generating unit is replaced by a unit extracting the representation generated at the base station from a received data flow and transmitting said representation back to the base station.

### Brief description of the drawings

Further objects, characteristics and advantages of the invention will become apparent from the following description of preferred embodiments, given by way of non-limiting example and illustrated in the accompanying drawings, in which:
- Fig. 1 is a schematic block diagram of a 3G LTE communication system;
- Fig. 2 is a diagram of TCP packet delivery from a file server to a user equipment in the system shown in Fig. 1;
- Fig. 3 is a schematic block diagram of an enhanced Node B and a user equipment in which the invention is used;
- Fig. 4 is a schematic block diagram of a module included in enhanced Node B according to the invention;
- Figs. 5A and 5B are diagrams showing two alternative arrangements, within the protocol stack of the user equipment, of a module included in the user equipment according to the invention;
- Fig. 6 is a flow chart of the operations performed at the enhanced Node B for implementing the method of the invention;
- Figs. 7A and 7B are flow charts of the operations performed at the user equipment for implementing the method of the invention;
- Fig. 8 is a diagram summarising the operations at the enhanced Node B and the user equipment.

### Description of the preferred embodiments

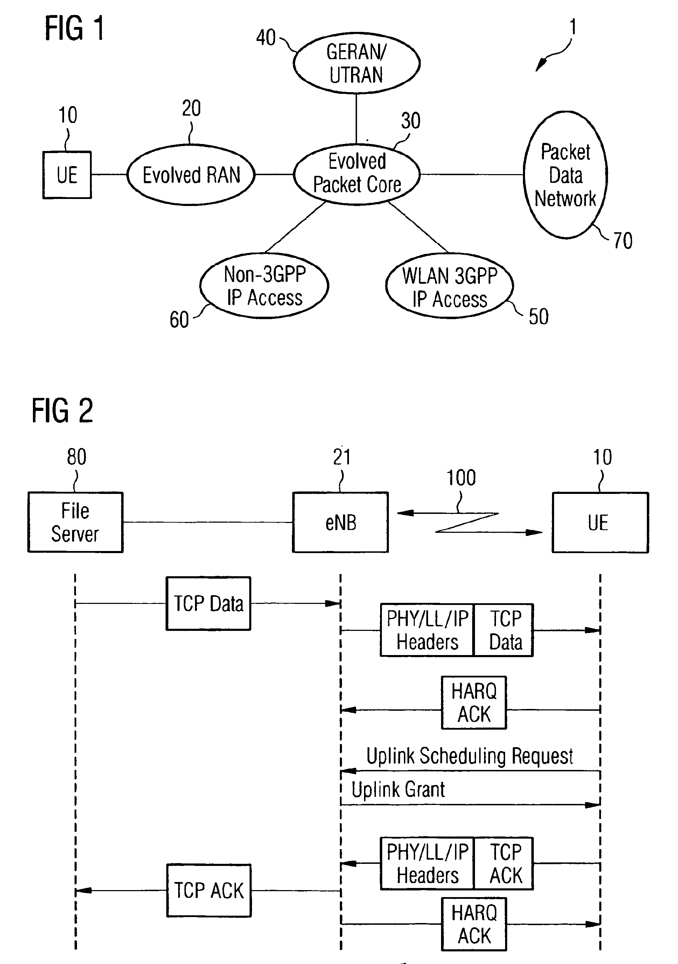

Fig. 1 illustrates the logical high-level architecture of a 3G LTE system 1. Users 10 (only one being shown) communicate with evolved packet core 30 via the evolved radio access network (E-UTRAN) 20 including base stations (enhanced Nodes B, eNBs), not shown in this Figure. Evolved packet core 30 provides local mobility management between eNBs and internetworking with previously released 2G, 2.5G and 3G systems (block GERAN/UTRAN 40), as well as with IP-based 3GPP wireless local area networks (block 50 labelled WLAN 3GPP IP Access) and with non-3GPP wireless technologies like WiFi, WiMAX or even with wired networks (block 60 labelled "non-3GPP IP access"). Evolved Packet Core 30 is connected also with external packet data networks like network 70. Network 70 may be an operator-external public or private packet data network or an intra-operator packet data network, e.g. for provision of IP Multimedia services. Further details about 3G LTE are not necessary for the understanding of the invention and can be found in the above-mentioned 3GPP documents.

Fig. 2 illustrates a conventional TCP data packet delivery in 3G LTE network. For sake of simplicity, a single packet delivery from a file server 80 to user equipment 10 via eNB 21 and radio channel 100 is considered. It is to be appreciated that the problem to be solved by the invention essentially occurs in unidirectional transmissions, since in case of bi-directional transmissions the TCP ACK can be encapsulated into an uplink data packet. On the other hand, as said above, both 3G LTE and standards IEEE 802.11 and 802.16 concern classes of services for which traffic is generally asymmetric, with the downlink component being predominant.

Enhanced Node B 21, upon reception of a TCP data packet from file server 80, forwards the received data packet over radio link 100 to the appropriate UE 10. For this downlink transmission, an overhead associated with physical, link and network layer headers (PHY/LL/IP headers) is added to the TCP packet. In UE 10, upon reception of the packet, the MAC layer generates and sends the HARQ ACK response (positive or negative, as the case may be) to eNB 21. At the same time, the received TCP data packet is forwarded up to the TCP layer of the protocol stack and, at the end of the processing in the stack, in case of successful packet delivery to UE 10, the TCP layer of UE 10 can generate a TCP layer acknowledgment TCP ACK to be sent to eNB 21. As known to the skilled in the art, generation of the TCP ACK for each data packet is not necessary, and other options can be envisaged (e.g., delayed or selective TCP ACK). In turn, eNB 21 will acknowledge the delivery of this and previously received data packets to file server 80 through an acknowledgment packet TCP ACK.

The ARQ process at the RLC layer is not shown, since the preferred embodiment of the invention described hereinafter exploits the HARQ acknowledgment at the MAC layer.

As said before, the TCP ACK generated by UE 10 is an ordinary payload for the UE link layer and is to be associated with PHY/LUIP overhead, so that it demands important uplink resources. Actually, a TCP ACK packet is comprised of TCP (at least 20 bytes) and IP (20 bytes) headers, plus the Packet Data Convergence Protocol (PDCP) and RLC headers and the PHY CRC. The lengths of the latter three fields have not yet been standardised, but indicative values of 1, 2 and 2 bytes, respectively, can be considered, resulting in a total length of some tens of bytes for the packet. Moreover, UE 10 must request uplink resources for the TCP ACK packet transmission over radio channel 100 (this adding to the uplink overhead) and wait for receiving the respective grant, and the TCP ACK packet delivery to eNB 21 is to be acknowledged by the eNB HARQ entity. Thus, the whole procedure is also rather complex and time-consuming.

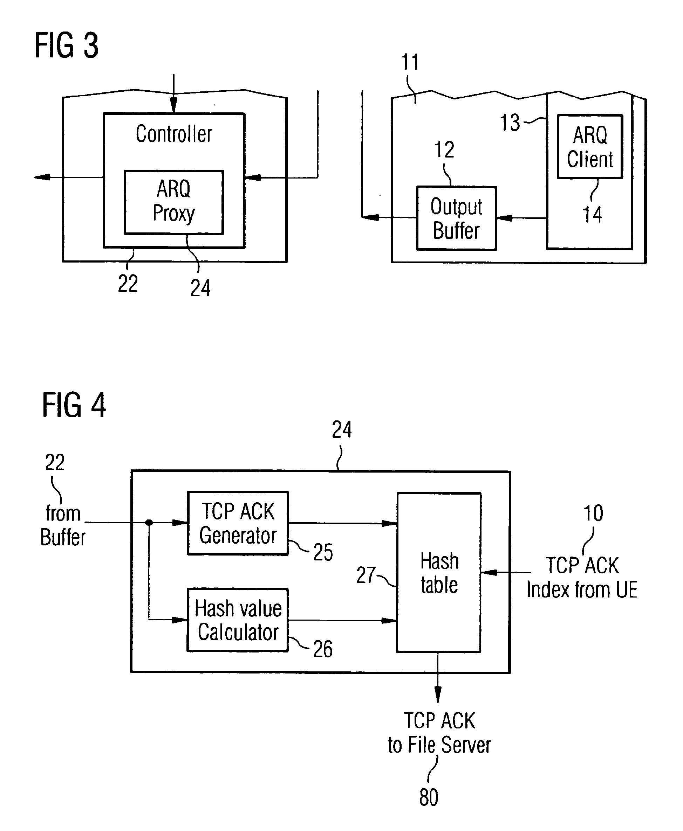

To obviate those drawbacks, according to the invention, controllers 23, 13 of enhanced Node B 21 and user equipment 10 are equipped with respective entities, preferably implemented as software modules, which, during the data transfer phase of a data connection, provide for substituting the transmission of a standalone TCP ACK packet over radio link 100 with the transmission of a much shorter MAC layer message including a representation of the TCP ACK packet. The two entities are referred to as ARQ Proxy (for enhanced Node B 21) and ARQ client (for user equipment 10) and are shown in Fig. 3 by blocks 24 and 14, respectively. The general internal organisation and structure of user equipment 10 and enhanced Node B 21 and the usual tasks of their controllers 13, 23 are not affected by the invention and need not to be illustrated in detail. For sake of clarity, only input buffer 11 and output buffer 12 (the latter forming the packet output queue, including the TCP acknowledgement packets) are shown in user equipment 10, and only packet buffer 21, where the packets directed to user equipment 10 are queued, is shown in enhanced Node B 21.

In a preferred embodiment of the invention, the substitution of a standalone TCP ACK packet with a much shorter MAC message is based on the application of a same hash function to predefined header fields of a packet in both enhanced Node B 21 and user equipment 10 and on the use of the resulting hash table in enhanced Node B 21.

As shown in Fig. 4, ARQ proxy 24 includes a TCP ACK generator 25 that sniffs the packets destined to the various UEs 10 and generates the TCP ACK packet acknowledging the reception of the data packet. To this end, generator 25 has access to the headers of the network and transport layers and simply copies the required fields (IP addresses, port numbers and flow sequence number) into corresponding fields of a previously allocated TCP ACK packet template stored inside TCP ACK generator 25.

The generated TCP ACK is not immediately released into evolved network core 30 (for being sent to file server 80, if it is located outside network core 30), but it is stored in a hash table 27 together with a corresponding hash value (hereinafter referred to as TCP ACK index) computed by hash value calculator 26. The actual release into network core 30 takes place at a later moment and is driven by the receiver, as it will become apparent below. As soon as TCP ACK and the relevant hash value are generated and stored, the original TCP data packet continues its path towards UE 10.

The TCP ACK index is computed by index calculator 26 by using IP and TCP header fields of the TCP ACK packet or the received data packet as an input for the hash function. Taking into account the manner in which the TCP ACK is generated from the data packet, the result is a representation of the TCP ACK also in the second case. Of course, ARQ proxy 24 and ARQ client 14 must operate on the same kind of packet (data or ACK). The drawing assumes that the hash function is applied to the header of the received data packet.

Theoretically, any hash function ensuring a sufficiently low probability of collisions could be employed to this end. However, taking into account that the TCP ACK index is to be transmitted over radio channel 100, the chosen function must result in a limited resource demand for such transmission. In practice, a function leading to a 16-bit index could be suitable. In an exemplary embodiment, the hash function provides a checksum of the input value. Hash functions are well known to the skilled in the art and no further details are necessary.

ARQ Client 14 essentially consists of a TCP ACK index calculator identical to calculator 26 in ARQ Proxy 24. In case of an outgoing standalone TCP ACK packet, the index calculator in ARQ Client 14 applies the same hash function as ARQ Proxy 24 to the same packet fields. The computed index is passed to eNB 21 together with the HARQ acknowledgment and causes the reading of the proper TCP ACK from table 27 and its release into network core 30. The index can thus be interpreted also as a request, from user UE 10 to eNB 21, to release the base station TCP ACK. The index is delivered to eNB 21 by using an interface between ARQ Proxy 24 and ARQ client 14 defined at the MAC layer.

Thus, by using the invention, the standalone uplink TCP ACK packets with a length of the order of the tens of bytes are replaced by MAC layer messages that are e.g. 16 bit (2 byte) long.

Note that, in view of TCP high robustness to ACK errors, motivated by the cumulative nature of TCP acknowledgements (i.e. every successfully received TCP ACK acknowledges all data received by the receiver up to the moment of this TCP ACK generation), introduction of any additional reliability into TCP ACK index transmission has been deemed unnecessary: thus, no overhead is introduced.

Note also that each TCP ACK stored in hash table 27 has a lifetime that is assigned at the moment of TCP ACK generation. When the lifetime is exceeded, the relevant item is silently dropped from the hash table. By this mechanism, eNB 21 ensures that memory resources are freed for TCP ACKs not requested by UE. The lifetime value can be set to be equal to TCP timeout.

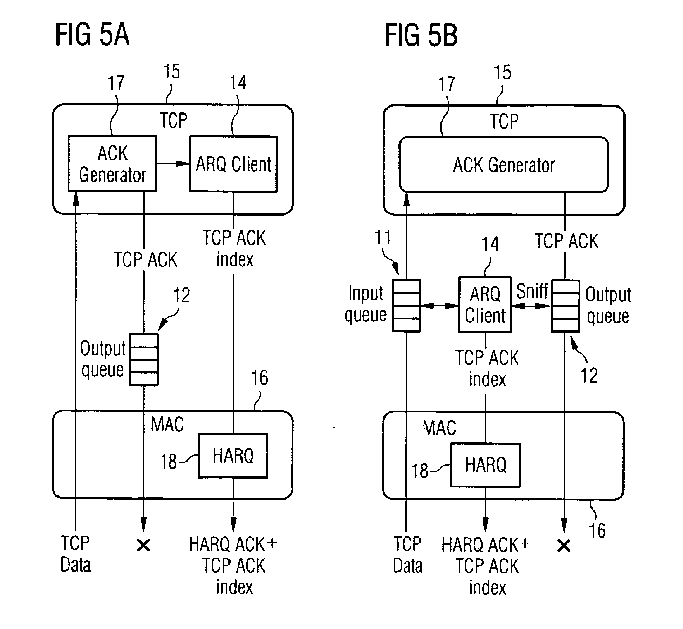

Two positions are envisaged for ARQ client 14 in the UE's protocol stack: in enhanced transport layer TCP 15 (Fig. 5A) or standalone, on top MAC layer 16 (Fig. 5B).

In case ARQ client 14 is implemented inside the transport layer, whenever a TCP ACK is produced as a standalone packet by ACK generation module 17, ARQ client 14 generates the corresponding TCP ACK index and sends it to HARQ module 18 in MAC layer 16 for transmission to eNB 21. If the HARQ ACK message has an insufficient capacity to accommodate the index itself (this being the present situation for LTE) HARQ module 18 is to request bandwidth resources to eNB 21 for TCP ACK index transmission. The request is made by setting a bit ("resource reservation bit") forming an extension of said HARQ ACK message. One bit is sufficient, since the index has a constant and predetermined length (e.g. 16 bits) and hence also the resources needed for its transmission are constant and known to both UE 10 and eNB 21, which therefore can provide the UE with a grant of sufficient size. Note also that the transmission of one bit does not create any problem from the resource availability standpoint.

While HARQ module 18 is awaiting the grant of bandwidth resources for TCP ACK index transmission, the originally generated TCP ACK packet travels the protocol stack down, and this involves corresponding processing at every layer, output queuing delay, and other procedures commonly performed by the protocol stack. Whichever comes first to the physical layer for transmission, the TCP ACK packet or the corresponding hash value, will be transmitted while the other one is cancelled. However, in general, the processing of the TCP ACK packet will be more time-consuming than the generation and processing of the index, so that the probability that the actual TCP ACK packet is to be transmitted is low. On the other hand, some form of transport layer acknowledgment (the index or the actual TCP ACK) has to be transmitted by user equipment 10 for the correct system operation.

Yet, an enhancement of the transport layer can be costly or sometimes not possible due to the large variety of TCP/IP enabled devices already deployed on the market. Thus, ARQ Client 14 is preferably implemented as a standalone module positioned on top the MAC layer. Such implementation does not require the modification of the protocol stack core (TCP and IP layers) and can be introduced on the driver level or inside the network interface firmware.

Referring to Fig. 5B, in standalone implementation, ARQ client 14 has access to both input and output queues 11, 12. When data packets arrive, ARQ client temporarily stores the headers and sniffs all outgoing packets produced at the transport layer to detect standalone TCP ACK packets. When a standalone TCP ACK packet is detected, ARQ Client 14 computes the index and passes it to HARQ module 18, while the original TCP ACK packet continues its outgoing path down the protocol stack. As before, whichever comes first to the physical layer for transmission, the TCP ACK packet or the corresponding index, will be transmitted while the other one is cancelled.

The described technique enables the design of hash value based ACK generation not synchronized with a particular HARQ ACK message. Indeed, as it will be readily appreciated by the skilled in the art, due to the processing involved during the travel of a packet along the protocol stack, the TCP ACK arrival at the physical layer will generally occur later than the HARQ ACK generation. In case a hash value transmission was not requested with the HARQ ACK generated for a TCP packet freshly received, it can be requested with a next outgoing HARQ ACK. However, in case MAC layer did not succeed to pass the index and TCP ACK is arrived down to the physical layer, it is transmitted like in a conventional system where the ARQ proxy and client are not provided.

The invention can be applied during the data transfer phase and TCP ACKs corresponding to the connection establishment or termination phases must be transmitted as such. Moreover, even during the data transfer phase, the invention can be applied provided the TCP ACK does not contain information that would become lost in the conversion into the TCP ACK index, as it could be for instance the case where a window ("rwnd" field in TCP header) different from the last advertised one is signalled.

Duplicate TCP ACKs advertising the loss of a packet could however be substituted according to the invention, provided the corresponding entries in the hash table are kept present until reception of the TCP ACK with the next sequence number or, more simply, until the timeout expiration.

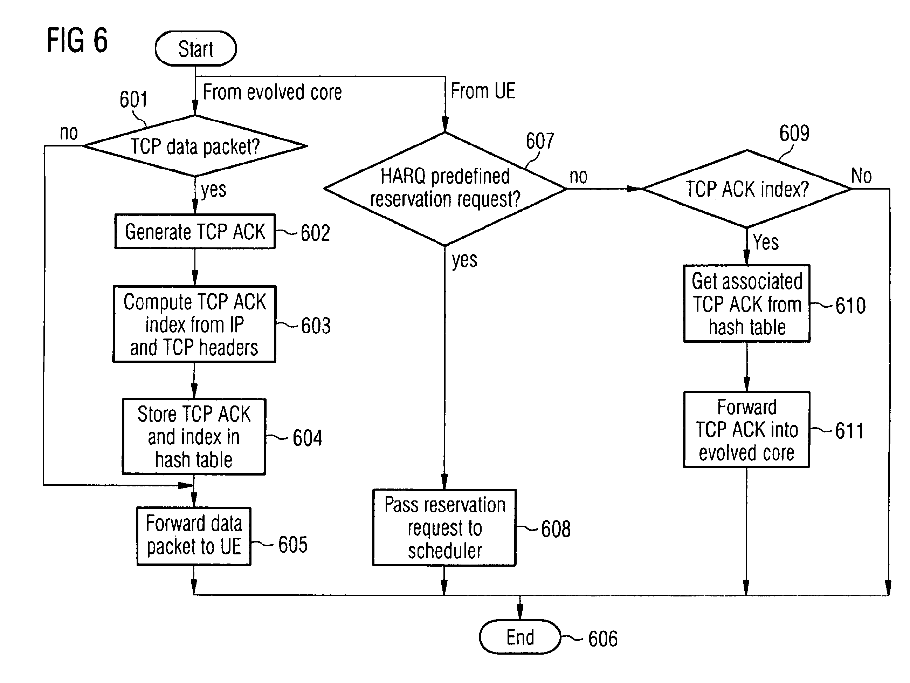

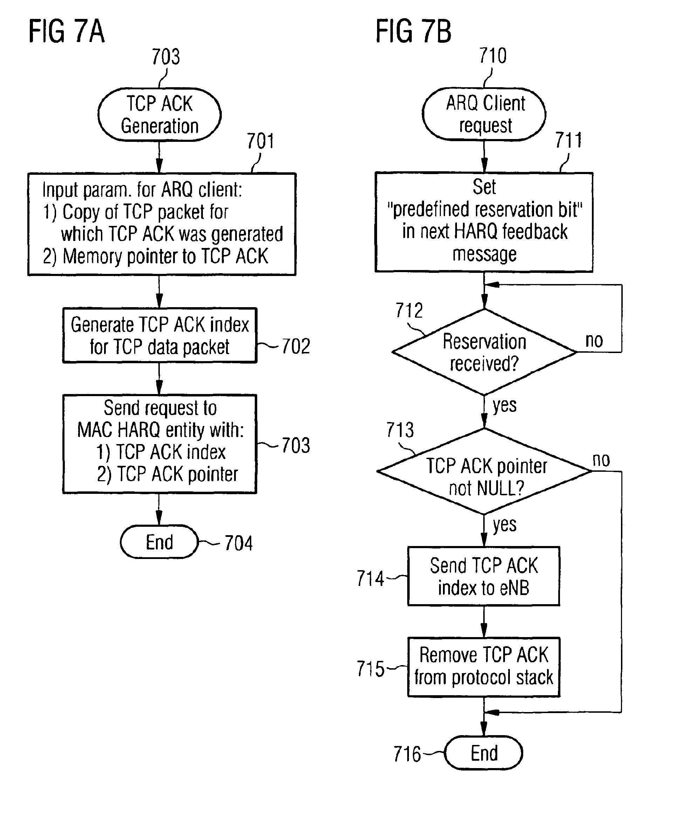

Figs. 6 and 7 depict in more detail the above-described operations of ARQ proxy 24 and ARQ client 14, respectively, assuming that transmission of the resource reservation bit is necessary.

Referring to Fig. 6, the starting step 600 of the process is the arrival of new data at eNB 21. The operations proceed differently depending on whether a data item comes from evolved packet core 30 or from user equipment 10.

In the first case, a check is made at step 601 on whether the data item is a TCP data packet. In the affirmative, TCP ACK is generated (step 602), the TCP ACK index is computed by applying the chosen hash function to the IP and TCP headers (step 603), the TCP ACK and the index are stored into hash table 27 (step 604) and then the data packet is forwarded to the concerned user equipment 10 (step 605). At this point the process ends (step 606).

If the check of step 601 reveals that the data item is not a TCP data packet, the data item is immediately forwarded to user equipment 10 and the process ends.

Should the data item come from user equipment, a check is made on whether it is a reservation bit (HARQ predefined reservation request, step 607). In the affirmative, the reservation request is passed to the scheduler (step 608) and the process ends. In the negative, a further check is made on whether the data item is a standalone TCP ACK index (step 609). In the negative, the process stops. In the affirmative, ARQ proxy 14 retrieves the associated TCP ACK from hash table 27 (step 610) and forwards it to evolved packet core 30 (step 611). The process ends.

The operations at the user equipment are shared between ARQ Client 14 (Fig. 7A) and HARQ module 18 (Fig. 7B).

As shown in Fig. 7A, the operations at ARQ Client 14 are started by a notification about a TCP ACK generation (step 700). In order to proceed, ARQ client 14 needs the following input parameters (step 701):
- a copy of the TCP data packet for which the TCP ACK was generated, or at least of its TCP/IP headers (supplied by the TCP device 15 or read from input queue 11); and
- the memory pointer to the generated TCP ACK.

After having received the input parameters, ARQ Client 14 generates (step 702) the TCP ACK index by applying the hash function to the TCP and IP headers of the received data packet or the TCP ACK packet, in a manner similar to what performed by ARQ Proxy 24 at step 603 (Fig. 6). Then, ARQ Client 14 sends to HARQ module 18 a request including the TCP ACK index and the memory pointer (step 703), whereafter the process ends.

At the HARQ entity, the operations are started by the reception of the request from ARQ Client 14 together with its enclosures (step 710). Then, the predefined reservation bit is set in the next outgoing HARQ feedback message (step 711) and, when the resource grant is received (output yes of step 712), it is checked that the TCP ACK pointer is not null (step 714). This check assumes that the TCP ACK pointer is reset to NULL if the TCP ACK packet has arrived at the physical layer, and then has been transmitted, before HARQ entity has been granted the resources for the index transmission or, generally, before the index is ready for transmission. If the TCP ACK pointer is null, the process immediately ends (step 716), otherwise the index is sent to eNB (step 714) and the TCP ACK is removed (step 715).

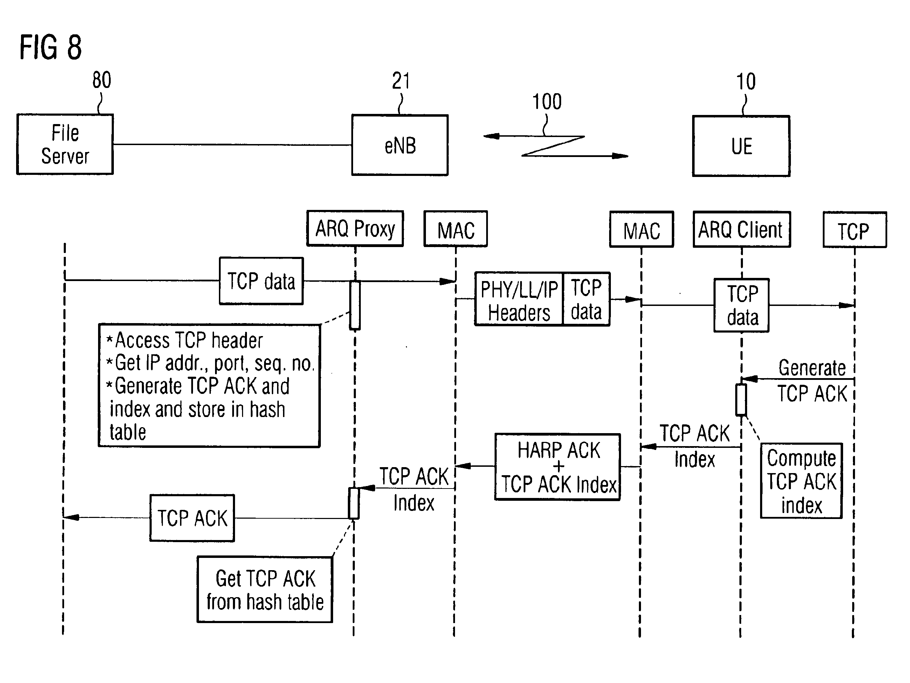

The operations of ARQ proxy 24 and ARQ client 14 are summarised in Fig. 8, where the interactions among the different protocol layers are depicted. Fig. 8 is self-explanatory in light of the preceding description. For sake of simplicity, the transmission of the reservation bit has not been explicitly indicated.

The major benefits provided by the invention are listed below:
- Performance and System Capacity: replacing the TCP ACK packet (having an indicative length of 45 bytes) with a much shorter MAC message (e.g. 16 bits, i.e. 2 bytes, plus the reservation bit) and eliminating the bandwidth negotiation for the TCP ACK packet uplink transmission considerably reduces the overhead and releases network resources in the uplink. The resources made available in this manner can be further reused by the same UE or by other nodes operating in the same cell. The increased uplink capacity can accommodate a higher number of network connections originated from UEs or, if combined with the downlink/uplink spectrum balancing, can correspond to the overall cell capacity increase.
- End-to-End (E2E): the invention replaces TCP ACKs on the radio link part of E2E network connection. However, this does not violate E2E semantics of the TCP protocol, since all TCP ACK transmissions originated at the eNB are triggered by the UE. Moreover, user equipment 10 requests the transmission of only those ACKs that are consistent with the employed acknowledgement strategy (delayed or selective acknowledgement) while TCP ACKs not requested are silently dropped at eNB 21 when their lifetime is exceeded.
- Channel error rate: the effect of channel error propagation is reduced for the TCP ACK index transmitted in the radio channel, since such index is much smaller than the whole of the original TCP ACK together with the overhead added at lower layers of the protocol stack.
- Round Trip Time (RTT): TCP throughput and error recovery performance depends on the Round Trip Time (RTT) between the sender and the receiver. In 3G LTE, RTT is composed of packet transmission delay from file server 80 to eNB 21 (or within network core 30, if file server 80 is located therein) as well as over the radio link. The invention reduces RTT for the time associated with TCP ACK transmission over the radio link including uplink bandwidth reservation delay, which depends on the UE's state (active or idle) and the employed framing and is typically of the order of tens of milliseconds. Quantitatively, simulations performed showed that, when using the invention and considering a file server located in the network core, the RTT is close to the delay experienced in the network core, whereas the original TCP scheme requires the further time consumed for the uplink resource reservation and TCP ACK transmission. Taking into account that the TCP throughput performance is inversely proportional to the RTT of the connection, the RTT reduction allowed by the invention results in further TCP flow performance improvement.
- Mobility: the support of full inter- and intra-network mobility is one of the most crucial requirements in cellular networks. Moreover, the UE's handover should be performed with minimum delay to endure uninterrupted service execution at guaranteed quality. For that reason, approaches that maintain UE's state or profile at eNB, like that disclosed in the above-mentioned paper by D. Kliazovich and F. Granelli, are not desirable due to the delay overhead associated with the state transfer during handover. When using the invention, in case UE changes its location and registers itself with another eNB, the hash table stored by the ARQ proxy at the old eNB is not transferred to the new eNB and can be deleted. In this way, after location update, the UE will send MAC layer requests for only those TCP ACKs that correspond to packets received from the new eNB.
- Incremental improvement: gradual introduction of the invention in networks already deployed is possible without disrupting or negatively affecting the operation: indeed, the user equipment maintains the capability of generating and transmitting the TCP ACK packet, so that eNBs not equipped with the ARQ proxy still can be advertised of the successful delivery of a TCP packet even if the user equipment is equipped with the ARQ client; this is impossible on the contrary in the prior art solution where the TCP ACK packet is always suppressed.

It is evident that the above description has been given by way of non-limiting example and that changes and modifications are possible without departing from the scope of the invention as defined in the appended claims.

In particular, a variant embodiment could take into account that the TCP packet header already contains a hash value for the TCP and IP headers in the checksum field. Thus it is possible to use this checksum as the TCP ACK index, so that explicit application of a hash function is no longer necessary. At ARQ proxy 24, the index is generated by directly reading the checksum field from the data packet header and storing it into table 27 together with the TCP ACK generated. At ARQ client 14, when a data packet arrives, its header will be temporarily stored as before, and when the corresponding TCP ACK is detected in output queue 12, the checksum of the received data packet is extracted and forwarded to HARQ module like the generic hash value in the embodiment described above. The operation of the invention remains thus substantially unchanged, the only difference being that the index computing steps 603 and 702 in the flow charts of Figs. 6 and 7A become simple reading steps for the checksum field; step 702 could even be seen as already included in the provision of the received packet copy to ARQ Client.

Another variant embodiment could exploit the fact that, besides the checksum field, other header fields in a packet have a content univocally identifying a packet and therefore can be used as the index representative of the TCP ACK: an example is the sequence number field in the TCP header. The considerations made above for the use of the checksum field apply also in this case, even if the index is no longer a hash value.

In the above variants, the TCP ACK index is a data packet field and thus it is transmitted by eNB 21 to UE 10. This principle can be generalised and applied also when the TCP ACK index is not a part of the data packet but is explicitly calculated.

In such case, the TCP ACK index needs to be generated only by ARQ Proxy 24 (e.g. by means of a hash function, like in the first embodiment) and will be forwarded to UE 10 along with the data packet. In UE 10, the index will be extracted from the received packet flow and passed to ARQ Client 14 for transmission to eNB when the TCP ACK packet relevant to the received data packet is detected.

Moreover, even use of the HARQ mechanism at the MAC layer for sending the TCP ACK index to eNB 21 has been considered, since this is particularly efficient, the invention could exploit instead the ARQ mechanism at the RLC layer.

Still further, the TCP ACK index needs not to be inserted into or associated with a lower layer acknowledgment of data unit reception at the user equipment 10, but it can be inserted into or associated with any feedback message at the PHY or LL layers sent by UE 10 to eNB 21, e.g. in the feedback messages containing Channel Quality Indicators (CQI) and so on.

Furthermore, even if the invention has been disclosed in detail in connection with its application to 3G LTE systems, the principles set forth can be applied also to other wireless systems, such as WiMAX or WiFi systems.

In case of WiMAX systems (IEEE 802.16 Standard), the MAC layer includes a service specific Convergence Sublayer (CS) performing the following functions:
- accepting higher layer protocol data units (PDUs) from the higher layer
- performing classification of higher layer PDUs
- processing (if required) the higher layer PDUs based on the classification
- delivering CS PDUs to the appropriate MAC SAP
- receiving CS PDUs from the peer entity.

In particular, the Packet CS is used for transport for all packet-based protocols such as Internet Protocol (IP), Point-to-Point Protocol (PPP), and IEEE Standard 802.3 (Ethernet). ARQ proxy/client entities should be implemented on top the Packet CS, since all input information for both ARQ proxy/client elements are already available therein. The ARQ client implementation corresponds to the standalone configuration proposed for 3G LTE systems (see Fig. 5B).

If the system considered supports the HARQ scheme, which is an option for the only case of physical layer based on Orthogonal Frequency Division Multiple Access (OFDMA), transmission of the reservation bit and the TCP ACK index to the base station could exploit the HARQ ACK mechanism with minimal modifications. Indeed, subclause 8.4.5.4.13 of Amendment 2 of the standard (IEEE 802 16e-2005) defines the Uplink Acknowledgment (UL ACK) channel for transmitting the positive/negative HARQ acknowledgement bit, which is encoded into a length 3 code word over 8-ary alphabet. By adopting other code words than those defined in the standard, the encoded HARQ acknowledgement of the last fragment of a packet can include the reservation bit. Moreover, since in case of Partial Usage of SubChannels (PUSC) one UL ACK does occupy only three of the six tiles available in a subchannel, the other three tiles could be exploited for transmitting the index, without need of employing the reservation bit. Since each tile is composed by 8 subcarriers modulated with QPSK symbols, so that 16 bits per tile can be transmitted, the three unused tiles make a total amount of 48 bits available for transmitting, for example, a 16 bit long index with some protection

If the HARQ scheme is not provided for, or exploiting the UL ACK channel is not desired, any PHY/LL feedback can be used, as said above.

The application of the invention to WiFi environment is straightforward and can be done without modifications of the MAC layer. Indeed, IEEE 802.11 standard implements a stop-and-wait ARQ at the link layer (LL), and every frame successfully transmitted should be acknowledged by a LL ACK, which is a standalone frame of 14 bytes. One field of that frame (the Duration field) contains 14 unused bits that could be used for uplink transmission of the index. In this case, the reservation bit is not necessary.

At the ARQ Proxy, the index can be generated by means of a hash function, as for 3G LTE systems. An alternative method is to use the 12-bit link layer sequence control number included in the MAC frames. In such case, if the mobile node (corresponding to a UE in 3G LTE) is to send a TCP ACK, it simply extracts the 12-bit sequence control number of the data frame with which the original TCP data packet was received and inserts it into the duration field of the ACK frame. This alternative method may be preferable in that it is well fitted also when fragmentation is used, since all fragments of a frame carry the same sequence number. Another alternative is possible in case of synchronous ARQ, when the mobile station is able to decide to request TCP ACK generation at the base station, i.e. to transmit the TCP ACK index, within 10 microseconds, which correspond to the Short InterFrame Space (SIFS). In this case the "index" can be a single bit included into the LL ACK acknowledging the TCP data packet to request the TCP ACK release from the base station. The base station, upon receiving that bit, releases the TCP ACK generated for the TCP data packet carried in the frame that is being acknowledged by this link layer ACK.

The single bit feedback technique could of course be used also in case of synchronous HARQ in 3G LTE systems.

The benefits discussed above for 3G LTE, including full support for high mobility and incremental deployment, are obtained also for WiFi.

## Claims

1. A method of optimising error recovery procedures during data transfer phases of data transmissions from a base station (21) to a user equipment (10) over a radio link (100) of a wireless communication system (1), wherein said data transmissions use a communication protocol in which said error recovery procedures include generation of transport layer acknowledgments (TCP ACK) of data unit reception at both the base station (21) and the user equipment (10), **characterised in that** the method comprises the following steps:
- generating (603, 702), at least at the base station (21), upon generation (602) of a transport layer acknowledgment (TCP ACK), a representation of said transport layer acknowledgment (TCP ACK) having a much smaller size than the whole of an acknowledging message carrying said transport layer acknowledgment only and any overhead added by protocol layers underlying said transport layer, the representation being obtained by applying a hash function to predetermined header portions of a data unit or of the transport layer acknowledgment generated for that data unit;
- storing (604) into a memory table (27), at said base station (21), the base station transport layer acknowledgments in association with the respective representations;
- detecting (700), at said user equipment (10), an acknowledging message (TCP ACK) to be transmitted to the base station (21);
- transmitting (714) from the user equipment (10) to the base station (21), in place of the detected acknowledging message (TCP ACK), a representation of the transport layer acknowledgment carried by said acknowledging message and corresponding to the representation generated at the base station (21) for a same received data unit;
- retrieving (610) from said memory table (27) the base station transport layer acknowledgment (TCP ACK) associated with said representation and releasing the retrieved transport layer acknowledgment (TCP ACK) (611) to a data sender (80).

2. The method as claimed in claim 1, **characterised in that** the transport layer acknowledgment is transmitted to the base station (21) if it is ready for transmission before the corresponding representation.

3. The method as claimed in claim 1, **characterised in that** said hash function produces a checksum of said header portions.

4. The method as claimed in any preceding claim, **characterised in that** said step of generating a representation of the transport layer acknowledgment (603, 702) is performed at both the base station (21) and the user equipment (10).

5. The method as claimed in claims 1 or 2 and 4, **characterised in that** said step of generating a representation of the transport layer acknowledgment (603, 702) is performed by extracting the content of a header field of a data unit univocally identifying the data unit.

6. The method as claimed in any of claims 1 to 4, **characterised in that** said step of generating a representation of the transport layer acknowledgment (603) is performed only at the base station (21), and the method further includes the steps of:
- transmitting the representation generated at the base station (21) to the user equipment (10) along with the data unit for which the representation has been generated;
- at the user equipment (10), extracting the representation from received a data flow and transmitting it back to the base station (21) upon generation of the transport layer acknowledgment for the corresponding data unit.

7. A base station (21) for a wireless communication system, wherein said base station (21) has means (24) for optimising error recovery procedures during a data transfer phase of downlink data transmissions over a radio channel (100), said error recovery procedures including generation of transport layer acknowledgments (TCP ACK) of data unit reception, and wherein said optimising means (24) include an acknowledging unit (25) for generating said transport layer acknowledgments and are arranged to release such transport layer acknowledgment towards a data sender (80) without need of receiving an actual transport layer acknowledgment from a user equipment (10), **characterised in that** said optimising means (24) further comprise:
- a generating unit (26) generating, whenever a transport layer acknowledgment is generated, a representation of said transport layer acknowledgment having a much smaller size than the whole of an acknowledging message carrying said transport layer acknowledgment only and of any overhead added to the acknowledging message by protocol layers underlying said transport layer, the representation being obtained by applying a hash function to predetermined header portions of a data unit or of the transport layer acknowledgment generated for that data unit; and
- a memory unit (27), connected to said generating and acknowledging units (26, 27), for storing said transport layer acknowledgment in association with the respective representation,
and **in that** said optimising means (24) are arranged to release a base station transport layer acknowledgment upon receiving from a user equipment (10), to which data units are delivered by the base station (21), a representation of a transport layer acknowledgment generated at the user equipment (10) and corresponding to the representation generated at the base station (21) upon reception of a same data unit, said received representation being used as a reading address for said memory unit (27) for reading a corresponding base station transport layer acknowledgment therefrom.

8. The base station (21) as claimed in claim 7, **characterised in that** said generating unit (26) is a hash value calculator operating on predetermined header portions of a received data unit or of the corresponding transport layer acknowledgment.

9. The base station (21) as claimed in claim 8, **characterised in that** said hash value calculator is arranged to calculate a checksum of said header portions.

10. The base station (21) as claimed in claim 7, **characterised in that** said generating unit (26) is arranged to extract, from the header of a received data unit, the content of a predetermined field univocally identifying the data unit and to store it into said memory unit (27) as the said representation.

11. A user equipment (10) for use in a wireless communication system, comprising means (14) for optimising error recovery procedures during a data transfer phase of downlink data transmissions over a radio channel (100), wherein said error recovery procedure include generation of transport layer acknowledgments of data unit reception, said optimising means (14) being arranged to detect standalone acknowledging messages carrying said transport layer acknowledgment only and to suppress uplink transmission thereof, **characterised in that** said optimising means (14) comprise a generating unit arranged to:
- generate, for each standalone acknowledging message, a representation of the transport layer acknowledgment carried therein having a much smaller size than the whole of the acknowledging message and any overhead added by protocol layers underlying said transport layer, the representation being obtained by applying a hash function to predetermined header portions of a data unit or of the transport layer acknowledgment generated for that data unit; and
- transmitting said representation over said radio channel (100) to a base station (21) to which the user equipment is connected, in place of said standalone acknowledging - message.

12. The user equipment (10) as claimed in claim 11, **characterised in that** said generating unit is a hash value calculator applying a hash function to predetermined header portions of a received data unit or the corresponding transport layer acknowledgment, the hash function being identical to a hash function applied in optimising means (24) of a base station (21) to which the user equipment is connected.

## Patentansprüche

1. Verfahren zum Optimieren von Fehlerbehebungsverfahren während Datenübertragungsphasen von Datenübertragungen von einer Basisstation (21) zu einem Benutzergerät (10) über eine Funkstrecke (100) eines drahtlosen Kommunikationssystems (1), wobei diese Datenübertragungen ein Kommunikationsprotokoll benutzen, in dem diese Fehlerbehebungsverfahren Erzeugung von Transportschichtbestätigungen (TCP ACK) von Dateneinheitsempfang sowohl an der Basisstation (21) als auch dem Benutzergerät (10) einschließen, **dadurch gekennzeichnet, dass** das Verfahren folgende Schritte umfasst:
- Erzeugen (603, 702), zumindest an der Basisstation (21), bei Erzeugung (602) einer Transportschichtbestätigung (TCP ACK) einer Darstellung der Transportschichtbestätigung (TCP ACK) mit einer viel geringeren Größe als das Ganze einer nur die Transportschichtbestätigung und jeglichen durch die der Transportschicht unterlagerten Protokollschichten zugefügten Kopfteil führenden Bestätigungsnachricht, wobei die Darstellung durch Anwenden einer Hash-Funktion auf vorbestimmte Kopfteilabschnitte einer Dateneinheit oder der für diese Dateneinheit erzeugten Transportschichtbestätigung erhalten wird;
- Abspeichern (604) der Basisstationstransportschichtbestätigungen in Verbindung mit den jeweiligen Darstellungen in eine Speichertabelle (27) an der Basisstation (21);
- Erkennen (700) an dem Benutzergerät (10) einer zur Basisstation (21) zu übertragenden Bestätigungsnachricht (TCP ACK);
- Übertragen (714) vom Benutzergerät (10) zur Basisstation (21) anstelle der erkannten Bestätigungsnachricht (TCP ACK) einer Darstellung der durch die Bestätigungsnachricht geführten und der an der Basisstation (21) für eine gleiche empfangene Dateneinheit erzeugten Darstellung entsprechenden Transportschichtbestätigung;
- Abrufen (610) aus der Speichertabelle (27) der mit der Darstellung verbundenen Basisstationstransportschichtbestätigung (TCP ACK) und Freigeben der abgerufenen Transportschichtbestätigung (TCP ACK) (611) zu einem Datensender (80).

2. Verfahren nach Anspruch 1, **dadurch gekennzeichnet, dass** die Transportschichtbestätigung zur Basisstation (21) übertragen wird, wenn sie vor der entsprechenden Darstellung zur Übertragung bereit ist.

3. Verfahren nach Anspruch 1, **dadurch gekennzeichnet, dass** die Hash-Funktion eine Prüfsumme der Kopfteilabschnitte erzeugt.

4. Verfahren nach einem beliebigen vorhergehenden Anspruch, **dadurch gekennzeichnet, dass** der Schritt des Erzeugens einer Darstellung der Transportschichtbestätigung (603, 702) sowohl an der Basisstation (21) als auch dem Benutzergerät (10) durchgeführt wird.

5. Verfahren nach Anspruch 1 oder 2 und 4, **dadurch gekennzeichnet, dass** der Schritt des Erzeugens einer Darstellung der Transportschichtbestätigung (603, 702) durch Entnehmen des Inhalts eines die Dateneinheit eindeutig identifizierenden Kopfteilfeldes einer Dateneinheit durchgeführt wird.

6. Verfahren nach einem beliebigen der Ansprüche 1 bis 4, **dadurch gekennzeichnet, dass** der Schritt des Erzeugens einer Darstellung der Transportschichtbestätigung (603) nur an der Basisstation (21) durchgeführt wird und das Verfahren weiterhin folgende Schritte umfasst:
- Übertragen der an der Basisstation (21) erzeugten Darstellung zum Benutzergerät (10) zusammen mit der Dateneinheit, für die die Darstellung erzeugt worden ist;
- am Benutzergerät (10) Entnehmen der Darstellung aus einem empfangenen Datenfluss und Zurückübertragen derselben zur Basisstation (21) bei Erzeugung der Transportschichtbestätigung für die entsprechende Dateneinheit.

7. Basisstation (21) für ein drahtloses Kommunikationssystem, wobei die Basisstation (21) Mittel (24) zum Optimieren von Fehlerbehebungsverfahren während einer Datenübertragungsphase von Abwärts-Datenübertragungen über einen Funkkanal (100) aufweist, wobei die Fehlerbehebungsverfahren Erzeugung von Transportschichtbestätigungen (TCP ACK) von Dateneinheitsempfang umfassen und wobei die Optimierungsmittel (24) eine Bestätigungseinheit (25) zum Erzeugen der Transportschichtbestätigungen umfassen und zum Freigeben solcher Transportschichtbestätigungen zu einem Datensender (80) ausgebildet sind, ohne eine tatsächliche Transportschichtbestätigung von einem Benutzergerät (10) empfangen zu müssen, **dadurch gekennzeichnet, dass** die Optimierungsmittel (24) weiterhin Folgendes umfassen:
- eine Erzeugungseinheit (26), die bei jeder Erzeugung einer Transportschichtbestätigung eine Darstellung der Transportschichtbestätigung mit einer viel geringeren Größe als das Ganze einer nur die Transportschichtbestätigung und jeglichen durch die der Transportschicht unterlagerten Protokollschichten zugefügten Kopfteil führenden Bestätigungsnachricht erzeugt, wobei die Darstellung durch Anwenden einer Hash-Funktion auf vorbestimmte Kopfteilabschnitte einer Dateneinheit oder der für diese Dateneinheit erzeugten Transportschichtbestätigung erhalten wird; und
- eine mit den Erzeugungs- und Bestätigungseinheiten (26, 27) verbundene Speichereinheit (27) zum Speichern der Transportschichtbestätigung in Verbindung mit der jeweiligen Darstellung,
und dass die Optimierungsmittel (24) zum Freigeben einer Basisstationstransportschichtbestätigung bei Empfang in einem Benutzergerät (10), zu dem Dateneinheiten durch die Basisstation (21) überführt werden, einer Darstellung einer am Benutzergerät (10) erzeugten und der an der Basisstation (21) bei Empfang einer gleichen Dateneinheit erzeugten Darstellung entsprechenden Transportschichtbestätigung ausgebildet sind, wobei die empfangene Darstellung als eine Leseadresse für die Speichereinheit (27) zum Auslesen einer entsprechenden Basisstationstransportschichtbestätigung daraus benutzt wird.

8. Basisstation (21) nach Anspruch 7, **dadurch gekennzeichnet, dass** die Erzeugungseinheit (26) ein vorbestimmte Kopfteilabschnitte einer empfangenen Dateneinheit oder der entsprechenden Transportschichtbestätigung bearbeitender Hash-Wert-Rechner ist.

9. Basisstation (21) nach Anspruch 8, **dadurch gekennzeichnet, dass** der Hash-Wert-Rechner zum Berechnen einer Prüfsumme der Kopfteilabschnitte ausgebildet ist.

10. Basisstation (21) nach Anspruch 7, **dadurch gekennzeichnet, dass** die Erzeugungseinheit (26) zum Entnehmen aus dem Kopfteil einer empfangenen Dateneinheit des Inhalts eines die Dateneinheit eindeutig identifizierenden vorbestimmten Feldes und Abspeichern desselben in die Speichereinheit (27) als die Darstellung ausgebildet ist.

11. Benutzergerät (10) zur Verwendung in einem drahtlosen Kommunikationssystem umfassend Mittel (14) zum Optimieren von Fehlerbehebungsverfahren während einer Datenübertragungsphase von Abwärts-Datenübertragungen über einen Funkkanal (100), wobei die Fehlerbehebungsverfahren Erzeugung von Transportschichtbestätigungen von Dateneinheitsempfang einschließen, wobei die Optimierungsmittel (14) zum Erkennen von nur die Transportschichtbestätigung führenden freistehenden Bestätigungsnachrichten und zum Unterdrücken von Aufwärtsübertragungen derselben ausgebildet sind, **dadurch gekennzeichnet, dass** die Optimierungsmittel (14) eine Erzeugungseinheit umfassen, die ausgebildet ist zum:
- Erzeugen für jede freistehende Bestätigungsnachricht einer Darstellung der darin geführten Transportschichtbestätigung mit einer viel geringeren Größe als das Ganze der Bestätigungsnachricht und jeglichen durch die der Transportschicht unterlagerten Protokollschichten zugefügten Kopfteil, wobei die Darstellung durch Anwenden einer Hash-Funktion auf vorbestimmte Kopfteilabschnitte einer Dateneinheit oder der für diese Dateneinheit erzeugten Transportschichtbestätigung erhalten wird; und
- Übertragen der Darstellung über den Funkkanal (100) zu einer Basisstation (21), mit der das Benutzergerät verbunden ist, anstelle der freistehenden Bestätigungsnachricht.

12. Benutzergerät (10) nach Anspruch 11, **dadurch gekennzeichnet, dass** die Erzeugungseinheit ein eine Hash-Funktion auf vorbestimmte Kopfteilabschnitte einer empfangenen Dateneinheit oder der entsprechenden Transportschichtbestätigung anwendender Hash-Wert-Rechner ist, wobei die Hash-Funktion mit einer im Optimierungsmittel (24) einer Basisstation (21), mit der das Benutzergerät verbunden ist, angewandten Hash-Funktion identisch ist.

## Revendications

1. Un procédé d'optimisation de procédures de reprise sur erreur au cours de phases de transfert de données de transmissions de données à partir d'une station de base (21) vers un équipement d'utilisateur (10) par l'intermédiaire d'une liaison radio (100) d'un système de communication sans fil (1), dans lequel lesdites transmissions de données utilisent un protocole de communication dans lequel lesdites procédures de reprise sur erreur comprennent la génération d'accusés de réception de couche de transport (TCP ACK) de réception d'unités de données à la fois sur la station de base (21) et sur l'équipement d'utilisateur (10), **caractérisé en ce que** le procédé comprend les opérations suivantes :
- la génération (603, 702), au moins sur la station de base (21), après la génération (602) d'un accusé de réception de couche de transport (TCP, ACK), d'une représentation dudit accusé de réception de couche de transport (TCP ACK) possédant une taille nettement plus petite que la totalité d'un message d'accusé de réception transportant ledit accusé de réception de couche de transport uniquement et tout surdébit ajouté par des couches de protocoles sous-jacentes à ladite couche de transport, la représentation étant obtenue par l'application d'une fonction de hachage à des parties d'en-tête prédéterminées d'une unité de données ou de l'accusé de réception de couche de transport généré pour cette unité de données,
- la mise en mémoire (604) dans une table de mémoire (27), sur ladite station de base (21), des accusés de réception de couche de transport de station de base en association avec les représentations respectives,
- la détection (700), sur ledit équipement d'utilisateur (10), d'un message d'accusé de réception (TCP ACK) à transmettre à la station de base (21),
- la transmission (714) à partir de l'équipement d'utilisateur (10) à la station de base (21), à la place du message d'accusé de réception détecté (TCP ACK), d'une représentation de l'accusé de réception de couche de transport transporté par ledit message d'accusé de réception et correspondant à la représentation générée sur la station de base (21) pour une même unité de données reçue,
- la récupération (610) à partir de ladite table de mémoire (27) de l'accusé de réception de couche de transport de station de base (TCP ACK) associé à ladite représentation et l'envoi dudit accusé de réception de couche de transport récupéré (TCP ACK) (611) à un expéditeur de données (80).

2. Le procédé selon la revendication 1, **caractérisé en ce que** l'accusé de réception de couche de transport est transmis à la station de base (21) s'il est prêt pour transmission avant la représentation correspondante.

3. Le procédé selon la revendication 1, **caractérisé en ce que** ladite fonction de hachage produit une somme de contrôle desdites parties d'en-tête.

4. Le procédé selon l'une quelconque des revendications précédentes, **caractérisé en ce que** ladite opération de génération d'une représentation de l'accusé de réception de couche de transport (603, 702) est exécutée à la fois sur la station de base (21) et sur l'équipement d'utilisateur (10).

5. Le procédé selon les revendications 1 ou 2 et 4, **caractérisé en ce que** ladite opération de génération d'une représentation de l'accusé de réception de couche de transport (603, 702) est exécutée par l'extraction du contenu d'un champ d'en-tête d'une unité de données identifiant de manière univoque l'unité de données.

6. Le procédé selon l'une quelconque des revendications 1 à 4, **caractérisé en ce que** ladite opération de génération d'une représentation de l'accusé de réception de couche de transport (603) est exécutée uniquement sur la station de base (21), et le procédé comprend en outre les opérations suivantes :
- la transmission de la représentation générée sur la station de base (21) à l'équipement d'utilisateur (10) conjointement avec l'unité de données pour laquelle la représentation a été générée,
- sur l'équipement d'utilisateur (10), l'extraction de la représentation à partir d'un flux de données reçu et sa transmission en retour à la station de base (21) après la génération de l'accusé de réception de couche de transport pour l'unité de données correspondante.

7. Une station de base (21) pour un système de communication sans fil, dans lequel ladite station de base (21) possède un moyen (24) d'optimisation de procédures de reprise sur erreur au cours d'une phase de transfert de données de transmissions de données en liaison descendante par l'intermédiaire d'un canal radio (100), lesdites procédures de reprise sur erreur comprenant la génération d'accusés de réception de couche de transport (TCP ACK) de réception d'unités de données, et dans lequel ledit moyen d'optimisation (24) comprend une unité d'établissement d'accusés de réception (25) destinée à générer lesdits accusés de réception de couche de transport et est agencé de façon à envoyer ledit accusé de réception de couche de transport vers un expéditeur de données (80) sans avoir besoin de recevoir un accusé de réception de couche de transport réel à partir d'un équipement d'utilisateur (10), **caractérisé en ce que** ledit moyen d'optimisation (24) comprend en outre :
- une unité de génération (26) générant, chaque fois qu'un accusé de réception de couche de transport est généré, une représentation dudit accusé de réception de couche de transport possédant une taille nettement plus petite que la totalité d'un message d'accusé de réception transportant ledit accusé de réception de couche de transport uniquement et de tout surdébit ajouté au message d'accusé de réception par des couches de protocoles sous-jacentes à ladite couche de transport, la représentation étant obtenue par l'application d'une fonction de hachage à des parties d'entête prédéterminées d'une unité de données ou de l'accusé de réception de couche de transport généré pour cette unité de données, et
- une unité de mémoire (27), raccordée auxdites unités d'établissement et de génération d'accusés de réception (26, 27), destinée à la mise en mémoire dudit accusé de réception de couche de transport en association avec la représentation respective,
et **en ce que** ledit moyen d'optimisation (24) est agencé de façon à envoyer un accusé de réception de couche de transport de station de base après réception à partir d'un équipement d'utilisateur (10), auquel des unités de données sont remises par la station de base (21), une représentation d'un accusé de réception de couche de transport générée sur l'équipement d'utilisateur (10) et correspondant à la représentation générée sur la station de base (21) après réception d'une même unité de données, ladite représentation reçue étant utilisée en tant qu'adresse de lecture pour ladite unité de mémoire (27) de façon à lire un accusé de réception de couche de transport de station de base correspondant provenant de celle-ci.

8. La station de base (21) selon la revendication 7, **caractérisée en ce que** ladite unité de génération (26) est un calculateur de valeur de hachage fonctionnant sur des parties d'en-tête prédéterminées d'une unité de données reçue ou de l'accusé de réception de couche de transport correspondant.

9. La station de base (21) selon la revendication 8, **caractérisé en ce que** ledit calculateur de valeur de hachage est agencé de façon à calculer une somme de contrôle desdites parties d'en-tête.

10. La station de base (21) selon la revendication 7, **caractérisée en ce que** ladite unité de génération (26) est agencée de façon à extraire, de l'en-tête d'une unité de données reçue, le contenu d'un champ prédéterminé identifiant de manière univoque l'unité de données et de façon à le placer en mémoire dans ladite unité de mémoire (27) sous la forme de ladite représentation.

11. Un équipement d'utilisateur (10) destiné à une utilisation dans un système de communication sans fil, comprenant un moyen (14) d'optimisation de procédures de reprise sur erreur au cours d'une phase de transfert de données de transmissions de données en liaison descendante par l'intermédiaire d'un canal radio (100), dans lequel ladite procédure de reprise sur erreur comprend la génération d'accusés de réception de couche de transport de réception d'unités de données, ledit moyen d'optimisation (14) étant agencé de façon à détecter des messages d'accusé de réception autonomes transportant ledit accusé de réception de couche de transport uniquement et de façon à supprimer la transmission en liaison montante de ceux-ci, **caractérisé en ce que** ledit moyen d'optimisation (14) comprend une unité de génération agencée de façon à :
- générer, pour chaque message d'accusé de réception autonome, une représentation de l'accusé de réception de couche de transport transporté dans celui-ci possédant une taille nettement plus petite que la totalité du message d'accusé de réception et tout surdébit ajouté par des couches de protocoles sous-jacentes à ladite couche de transport, la représentation étant obtenue par l'application d'une fonction de hachage à des parties d'entête prédéterminées d'une unité de données ou de l'accusé de réception de couche de transport généré pour cette unité de données, et
- la transmission de ladite représentation par l'intermédiaire dudit canal radio (100) à une station de base (21) à laquelle l'équipement d'utilisateur est raccordé, à la place dudit message d'accusé de réception autonome.

12. L'équipement d'utilisateur (10) selon la revendication 11, **caractérisé en ce que** ladite unité de génération est un calculateur de valeur de hachage appliquant une fonction de hachage à des parties d'en-tête prédéterminées d'une unité de données reçue ou à l'accusé de réception de couche de transport correspondant, la fonction de hachage étant identique à une fonction de hachage appliquée dans le moyen d'optimisation (24) d'une station de base (21) à laquelle l'équipement d'utilisateur est raccordé.
